# FASCICULE DE BREVET EUROPEEN

(11) **EP 2 946 104 B1**
(45) Date de publication et mention de la délivrance du brevet: **04.12.2019**
(21) Numéro de dépôt: 14700706.6
(22) Date de dépôt: 16.01.2014
(51) Int. Cl.: F02K 9/46, F02K 9/78, F02C 6/08, F02C 7/26

(54) **DISPOSITIF DE DÉMARRAGE D'UNE TURBOPOMPE DE MOTEUR FUSÉE**
ANLASSERVORRICHTUNG FÜR RAKETENMOTORTURBOPUMPE
STARTER DEVICE FOR ROCKET MOTOR TURBOPUMP

(30) Priorité: 18.01.2013 FR 1350456
(43) Date de publication de la demande: 25.11.2015
(73) Titulaire: ArianeGroup SAS, 75015 Paris (FR)
(72) Inventeur: DUTHEIL, Jean-Philippe, F-33127 Martignas-sur-Jalles (FR); VINET, Pierre, F-78640 Villers Saint Frederic (FR)
(74) Mandataire: Brevalex
(86) Numéro de dépôt international: PCT/EP2014/050838
(87) Numéro de publication internationale: WO 2014/111485

(56) Documents cités:
- EP-A1- 0 388 613
- DE-A1- 3 908 318
- GB-A- 754 141
- US-A- 2 745 247

## Description

### Arrière plan de l'invention

### Domaine de l'invention

La présente invention concerne un dispositif de démarrage d'une turbopompe de moteur fusée dans un aéronef, par exemple un avion spatial comportant une double motorisation moteur à turbine et moteur fusée, le moteur à turbine pouvant notamment être un turbo réacteur.

Un tel avion spatial peut être un véhicule mono-étage, c'est à dire que les deux motorisations sont placées dans une même carlingue durant tout le vol de l'avion spatial. Ou bien il peut s'agir d'un véhicule bi-étage, où les motorisations sont placés dans deux véhicules distincts, liés lors du décollage mais qui se séparent lors du vol.

### Arrière plan technologique

Pour les aéronefs à moteurs fusées, l'alimentation des moteurs fusées en propergols est généralement réalisée au moyen de turbopompes.

Une turbopompe est une pompe entraînée par une turbine c'est à dire un dispositif rotatif entraîné par un fluide en mouvement.

Les turbopompes servent à pomper des fluides, les ergols depuis les réservoirs vers les chambres de combustion du moteur fusée.

Dans le cas des lanceurs spatiaux, les turbopompes sont démarrées avant le décollage du lanceur puis leur fonctionnement est maintenu pendant toute la phase de poussée du moteur fusée. Pour les étages supérieurs, les turbopompes sont mises en route lors d'une phase de démarrage des moteurs fusées de ces étages supérieurs coïncidant avec la séparation des étages.

Pour démarrer les turbopompes une technique consiste à utiliser un générateur de gaz dans lequel est brûlé une petite fraction des propergols d'alimentation du ou des moteurs fusée, ce générateur de gaz entraînant la turbine des turbopompes.

Les turbopompes peuvent aussi être démarrées à l'aide d'un démarreur comportant un bloc de propergol solide dont la combustion fournit des gaz chauds entraînant la turbine de la turbopompe en rotation, la turbopompe aspirant alors les ergols destinés à alimenter le moteur fusée.

Les turbopompes peuvent aussi être démarrées au moyen de gaz froids stockés sous haute pression dans un réservoir dédié emporté par le véhicule.

Les dispositifs de démarrage des turbopompes fournissent des gaz avec une énergie suffisante pour la mise en rotation des turbines qui entraînent à leur tour les pompes d'alimentation en propergols du moteur fusée.

Dans le cadre d'un avion atmosphérique comportant un moteur à turbine et un moteur fusée d'appoint pour accroître la poussée ou pour des vols à très haute altitude, le document US 2 531 761 décrit d'utiliser des gaz chauds issus de la chambre de combustion d'un turboréacteur.

Ces gaz chauds sont introduits dans la turbine d'une turbopompe par un premier circuit d'alimentation, alors qu'une chambre de combustion d'un générateur de gaz utilisant les ergols d'alimentation du moteur fusée est raccordée à un second circuit d'alimentation de cette turbine.

A l'exception du dispositif de démarrage utilisant des gaz froids stockés sous haute pression, les dispositifs de l'art antérieur utilisant des gaz chauds font subir un choc thermique important à la turbine lors de son démarrage.

Par exemple, la température des gaz d'un démarreur pyrotechnique est d'environ 1300°C au moins et la prise de gaz chauds issue de la chambre de combustion du turboréacteur du document US 2 531 761 est d'environ 1200°C.

Le dispositif à stockage sous pression est pour sa part pesant et volumineux.

Enfin, pour un aéronef de type avion spatial destiné à réaliser de nombreux vols, le critère du cout d'utilisation est primordial. Ceci signifie qu'il faut limiter les activités de maintenance et de remplacement de pièces entre deux vols ; d'où la nécessité de réduire au maximum les contraintes vues par les divers équipements, pour augmenter leur durée de vie.

Il y a donc lieu dans ce cadre de diminuer les chocs thermiques subies par les turbopompes, et donc de diminuer les températures qu'elles subissent et de les faire chauffer plus progressivement.

Les documents GB 754,141 et US 2,745,247 divulguent encore autres systèmes de propulsion à double motorisation.

### Brève description de l'invention

La présente invention propose un dispositif selon la revendication 1 de démarrage d'une turbopompe de moteur fusée d'un aéronef comprenant un moteur à turbine propulseur de l'aéronef et un moteur fusée, caractérisé en ce qu'il comporte une alimentation pneumatique de démarrage d'une turbine de la turbopompe par un circuit d'injection d'air comprimé prélevé au moyen d'un piquage sur un étage de compresseur du moteur à turbine propulseur de l'aéronef en amont de la chambre de combustion dudit moteur à turbine.

Par rapport à l'art antérieur, le dispositif de la présente invention qui utilise des gaz non brûlés permet d'éviter de causer un choc thermique à la turbine de la turbopompe lors de son démarrage à froid.

Le dispositif de la présente invention chauffe beaucoup moins la turbine que les dispositifs de l'art antérieur puisqu'il utilise de l'air compressé d'une température d'environ 600°C au maximum. Il reste en outre peu volumineux et n'ajoute que peu de masse au système de propulsion de l'aéronef.

En outre, les organes de contrôle du flux gazeux d'alimentation de la turbine ne subissent pas de fortes températures contrairement aux les dispositifs de l'art antérieur.

Le dispositif comprend une chambre de combustion d'un générateur de gaz d'entraînement en rotation de la turbine de la turbopompe, ladite chambre étant en phase de fonctionnement du moteur fusée alimentée en ergols liquides.

Selon un mode de réalisation particulier, le circuit d'injection d'air comprimé dans la turbine est adapté à remplir ladite chambre au moyen dudit air comprimé en sorte de réaliser une injection d'oxygène gazeux avec au moins un ergol liquide ou dans un mélange des ergols liquides pendant la phase d'allumage du générateur de gaz en sorte d'améliorer le démarrage de la combustion de ces ergols liquides.

Selon un mode de réalisation avantageux, le dispositif comprend en outre des moyens de refroidissement de l'air prélevé.

Selon un mode de réalisation particulier, les moyens de refroidissement comportent un échangeur de chaleur refroidi avec de l'air extérieur à l'aéronef.

Selon un mode de réalisation alternatif ou complémentaire, les moyens de refroidissement utilisent toute ou partie d'une ligne d'alimentation en ergols cryogéniques du moteur fusée.

Avantageusement, l'alimentation pneumatique de la turbine de la turbopompe est équipée de vannes, de moyens de calibrage et de clapets anti-retour adaptés à réaliser une mise en rotation rapide et contrôlée de la turbine à partir du piquage.

L'invention concerne en outre un système de propulsion d'un aéronef comportant au moins un moteur à turbine et au moins un moteur fusée qui comporte un dispositif de démarrage d'une turbopompe du moteur fusée selon l'invention et l'invention s'applique en particulier à un avion spatial ou un avion hypersonique comportant un tel système de propulsion.

L'invention concerne enfin un procédé selon la revendication 10 de démarrage d'une turbopompe de moteur fusée au moyen d'un dispositif de l'invention, comportant une première étape d'injection d'air comprimé dans une turbine de la turbopompe;
puis une étape d'injection d' ergols dans une chambre de combustion d'un générateur de gaz d'entraînement de la turbopompe grâce à l'entrainement de la turbine par l'air comprimé.

Avantageusement, l'injection d'air dans la turbine est arrêtée au moyen d'un clapet, quand la pression dans le générateur de gaz dépasse la valeur de réglage du clapet.

### Brève description des dessins

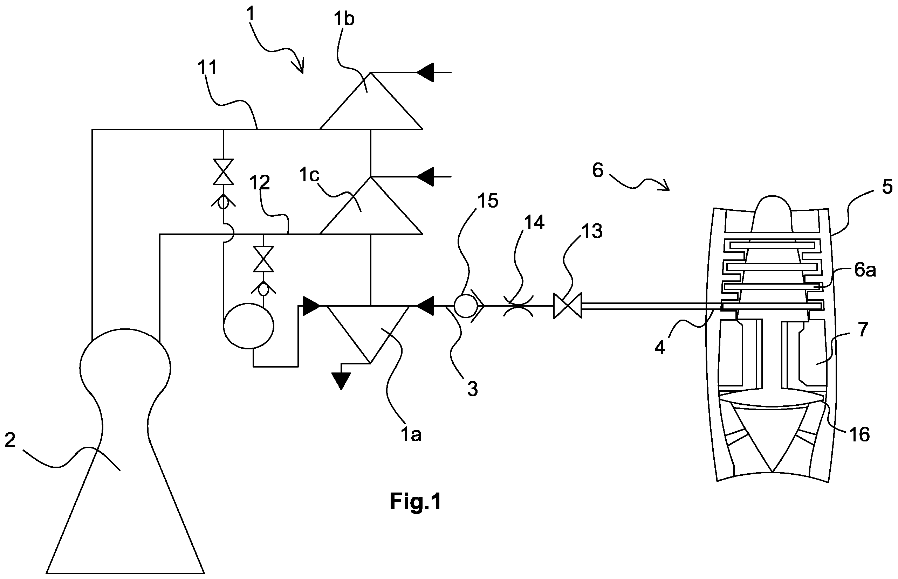

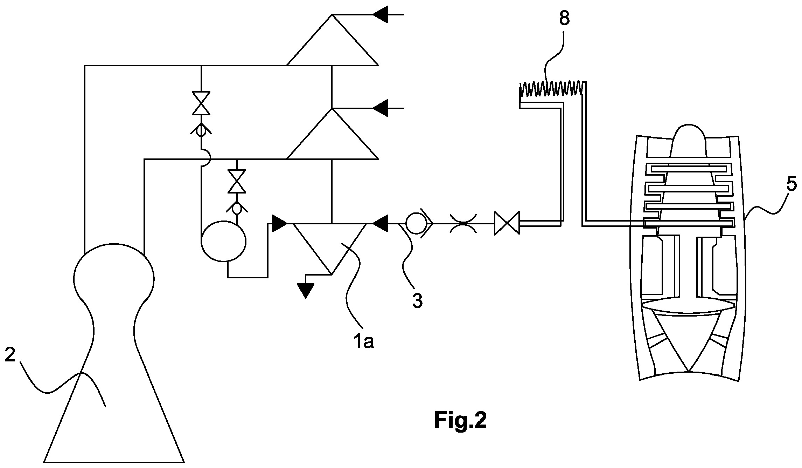

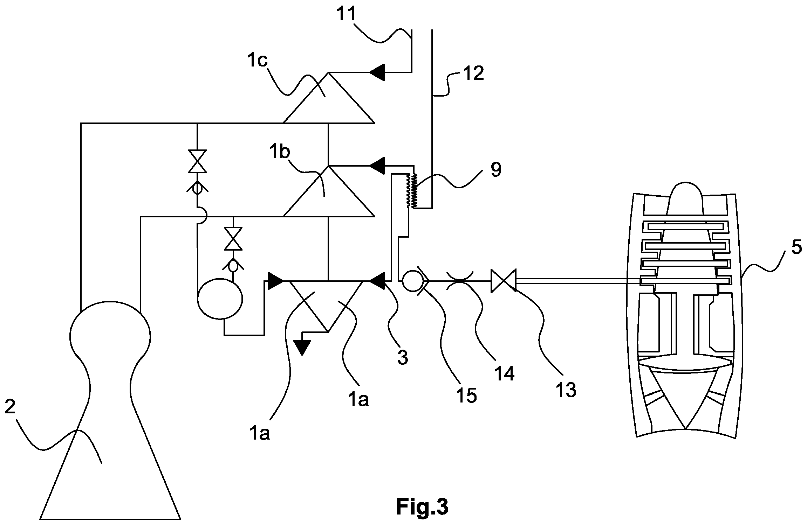

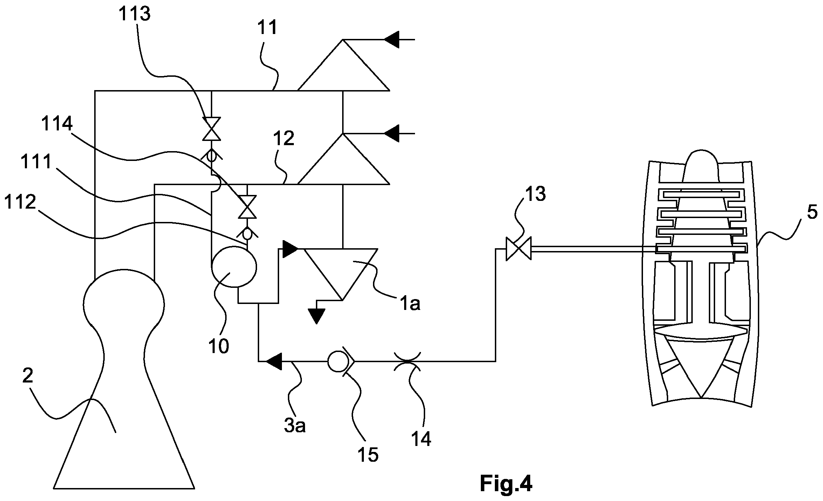

D'autres caractéristiques et avantages de l'invention seront apparents à la lecture de la description qui suit en référence aux dessins qui représentent:
en figure 1: une vue schématique d'un dispositif selon le principe de l'invention;
en figure 2: une vue schématique d'un dispositif selon une première variante de l'invention avec échangeur d'air;
en figure 3: une vue schématique d'un dispositif selon une deuxième variante de l'invention avec échangeur liquide;
en figure 4: une vue schématique d'un dispositif selon une troisième variante de l'invention avec alimentation au travers d'une chambre de générateur de gaz.

### Description détaillée de modes de réalisation de l'invention

L'invention concerne un système de motorisation d'un avion-spatial comportant deux systèmes propulsifs distincts: un ou plusieurs turboréacteurs pour le vol en phase atmosphérique et un système propulsion fusée utilisant un ou plusieurs moteurs fusée à ergols liquides avec turbopompes pour un vol spatial tel qu'un vol suborbital.

La figure 1 représente schématiquement un tel système de motorisation comportant un turboréacteur 5 et un moteur fusée 2 entre lesquels se trouve une turbopompe 1 d'alimentation du moteur fusée conformément à l'invention.

Par souci de simplicité, les réservoirs et systèmes annexes connus tant du moteur fusée que du moteur thermique de l'aéronef ne sont pas représentés.

La turbopompe est ici une turbopompe comportant une turbine 1a d'entraînement de deux pompes 1b, 1c qui alimentent sous pression le moteur fusée avec des propergols liquides 11, 12 par exemple un carburant et un comburant pompés à partir de réservoirs classiques dans la technique et non représentés.

Le moteur à turbine 5 propulsif de l'aéronef par exemple de type turboréacteur comporte de manière traditionnelle plusieurs étages de compresseurs 6, une chambre de combustion 7 et une turbine 16 soumise au flux de sortie de la chambre de combustion et entraînant les compresseurs 6.

Le dispositif de l'invention prélève de l'air comprimé par les compresseurs 6 pour alimenter un circuit fluide de la turbine 1a de la turbopompe 1 du ou des moteurs fusée.

Ce circuit d'alimentation comporte un piquage 4 au niveau d'un étage de compresseur 6a du moteur à turbine 5.

L'étage de compresseur sur lequel est fait le piquage est choisi pour permettre un prélèvement ne dégradant pas le fonctionnement du moteur à turbine, ce prélèvement étant en outre réalisé sur un étage donnant une température de gaz et une pression compatible avec le fonctionnement de la turbine 1a de la turbopompe 1. Le piquage est effectué sur un étage de compresseur fournissant une moyenne pression par exemple une pression de l'ordre de 10 bars

Le circuit 3 reliant la turbine 1a au piquage 4 est équipé d'une vanne 13 destinée à ouvrir ou fermer l'alimentation en air comprimé de la turbine.

La vanne 13 est ouverte pour mettre en rotation la turbine 1a puis fermée une fois la turbopompe démarrée et alimentée par une fraction des propergols du moteur fusée.

Le circuit comporte en outre des moyens de calibrages fluide 14 et un clapet anti-retour 15.

L'ensemble de ces moyens permettent une mise en alimentation rapide et contrôlée de la turbine à partir du piquage 4 de prélèvement d'air pressurisé en amont de la chambre de combustion 7 du turboréacteur.

La possibilité de choisir l'étage du compresseur pour le prélèvement d'air permet d'ajuster la température de l'air comprimé.

La possibilité de limiter la température des gaz arrivant dans la turbine 1a pendant la phase transitoire de mise en rotation de la turbine est un élément déterminant pour améliorer la durée de vie de la turbine.

En effet, la turbine subit pendant cette phase de démarrage un gradient thermique important à partir de la température ambiante jusqu'à celle des gaz chauds issus de la combustion des propergols.

Selon les figures 2 et 3, un ajustement de la température de l'air comprimé fourni à la turbine 1a de la turbopompe est réalisé par un échangeur 8, 9 sur la ligne d'alimentation de la turbine.

Selon l'exemple de la figure 2 l'échangeur est un échangeur air/air 8 situé au niveau d'une prise d'air externe de sorte que l'air extérieur traversé par l'aéronef refroidisse les gaz sous pression alimentant la turbine 1a.

Selon l'exemple de la figure 3, l'échangeur 9 est un échangeur air/liquide situé sur un circuit d'alimentation de la pompe 1b en ergol 12 ce qui est particulièrement avantageux si l'ergol est à température cryogénique.

Il est notamment possible soit d'utiliser la ligne cryogénique comme source de froid, soit utiliser tout ou partie de ce qui circule dans cette ligne cryogénique comme source de froid dans le circuit froid d'un échangeur.

Le circuit des turbopompes comprend une chambre de combustion 10 d'un générateur de gaz en communication avec la turbine de la turbopompe.

Ce générateur de gaz est alimenté par les ergols cryogéniques 11, 12 pompés par les pompes 1b, 1c de la turbopompe qui sont enflammés dans la chambre de combustion par un moyen d'allumage connu en soi.

Lorsque l'air comprimé est 'injecté au niveau de la turbine, ou de son carter d'injection, il remonte vers la chambre de combustion du générateur de gaz du fait de l absence de clapet entre la turbine de cette chambre de combustion, cette dernière contient aussi de l'air, ce qui va faciliter l'allumage des ergols.

Le circuit d'alimentation en air sert dans ce cas à injecter l'oxygène gazeux de l'air prélevé sur le turboréacteur pendant la phase d'allumage du générateur de gaz alimentant la turbine ce qui est de nature à améliorer cette phase d'allumage.

En effet, dans le cas des ergols cryotechniques l'allumage en phase liquide n'est pas aisé à maitriser. C'est pourquoi un allumage du carburant liquide avec l'oxygène de l'air peut rendre la phase d'allumage du générateur de gaz et donc de démarrage du moteur fusée plus fiable.

Ainsi le démarrage du moteur fusée comprend une première étape d'injection d'air comprimé dans une turbine de la turbopompe puis une étape d'injection d' ergols dans une chambre de combustion 10 d'un générateur de gaz d'entraînement de la turbopompe grâce à l'entrainement de la turbine par l'air comprimé. Une fois la turbopompe démarrée, l'injection d'air dans la turbine est arrêtée au moyen d'un clapet 15, quand la pression dans le générateur de gaz dépasse la valeur de réglage du clapet.

Ceci est donc un avantage de l'invention qui prélève de l'air en sortie de compresseur plutôt que dans ou derrière la chambre de combustion du turboréacteur où il n'y a plus d'oxygène disponible comme comburant.

Dans un tel montage, la séquence commence par une mise en rotation de la turbine 1a par l'air injecté depuis le compresseur 6 tandis que les lignes 111, 112 d'alimentation en ergols sont fermées par les vannes 113, 114. Ensuite, le carburant liquide pompé par la turbopompe (par exemple l'ergol 12) est injecté dans la chambre 10 en ouvrant la vanne 114 et ce carburant est enflammé avec l'oxygène de l'air comprimé au moyen d'un dispositif d'allumage tel qu'une bougie d'allumage. Ensuite, le comburant 11 est injecté en ouvrant la vanne 113. Une fois la combustion établie, l'arrivée d'air est coupée en fermant la vanne 13 ce qui termine la phase de démarrage du moteur fusée.

A noter que quand le véhicule est un avion spatial bi-étage, il faut simplement prévoir sur la ligne d'air comprimé entre le turboréacteur et la turbine un dispositif de déconnexion automatique qui permette de séparer cette ligne au moment de la séparation d'étage.

Le dispositif de l'invention réalise de la sorte une injection d'oxygène gazeux avec un ergol ou dans un mélange des ergols liquides pendant la phase d'allumage du générateur de gaz en sorte d'améliorer le démarrage de la combustion des ergols liquides du générateur de gaz.

Une autre possibilité offerte par ce système est de faire fonctionner le moteur fusée en mode de poussée réduite en actionnant la turbine au moyen d'une combustion d'un débit limité de carburant liquide 12 du system propulsion fusée avec l'air issu du turboréacteur.

Ce mode de fonctionnement, limité à la phase de vol atmosphérique aéronautique lorsque le ou les turboréacteurs fonctionnent, peut répondre à un éventuel besoin du véhicule en poussée supplémentaire.

L'invention s'applique notamment à un avion spatial avec double propulsion turboréacteur et moteur fusée ou à un avion hypersonique avec double propulsion turboréacteur et moteur fusée.

## Revendications

1. Dispositif de démarrage d'une turbopompe (1) de moteur fusée (2) d'un aéronef comprenant un moteur à turbine (5) propulseur de l'aéronef et ledit moteur fusée (2), **caractérisé en ce que** le dispositif comporte une alimentation pneumatique de démarrage d'une turbine (1a) de la turbopompe par un circuit (3) d'injection d'air comprimé prélevé au moyen d'un piquage (4) sur un étage de compresseur (6a) du moteur à turbine (5) propulseur de l'aéronef en amont d'une première chambre de combustion (7) dudit moteur à turbine, l'alimentation pneumatique comportant le circuit (3) et le piquage (4), et **en ce que** le dispositif comprend une deuxième chambre (10) de combustion d'un générateur de gaz dédié à l'entraînement en rotation de la turbine (1a) de la turbopompe (1), ladite deuxième chambre de combustion (10) étant adapté à être alimentée en ergol liquide (11, 12) grâce à l'entrainement préalable de la turbopompe par l'air comprimé du circuit (3) d'injection.

2. Dispositif selon la revendication 1, pour lequel le circuit (3) d'injection d'air comprimé dans la turbine est adapté à remplir ladite chambre (10) au moyen dudit air comprimé en sorte de réaliser une injection d'oxygène gazeux avec au moins un ergol liquide ou dans un mélange des ergols liquides pendant la phase d'allumage du générateur de gaz en sorte d'améliorer le démarrage de la combustion de ces ergols liquides.

3. Dispositif selon la revendication 1 ou 2 comprenant des moyens de refroidissement (8, 9) de l'air prélevé.

4. Dispositif selon la revendication 3 pour lequel les moyens de refroidissement comportent un échangeur (8) de chaleur refroidi avec de l'air extérieur à l'aéronef.

5. Dispositif selon la revendication 3 ou 4 pour lequel les moyens de refroidissement utilisent toute ou partie d'une ligne d'alimentation en ergols cryogéniques du moteur fusée.

6. Dispositif selon l'une quelconque des revendications précédentes pour lequel le circuit (3) d'injection d'air comprimé d'alimentation pneumatique de la turbine de la turbopompe est équipé d'une vanne (13), de moyens de calibrage (14) et d'un clapet anti-retour (15) adaptés à réaliser une mise en rotation rapide et contrôlée de la turbine à partir du piquage.

7. Système de propulsion d'un aéronef comportant au moins un moteur à turbine de propulsion (5) et au moins un moteur fusée (2) **caractérisé en ce qu'**il comporte un dispositif de démarrage d'une turbopompe (1) du moteur fusée (2) selon l'une quelconque des revendications précédentes.

8. Avion spatial comportant un système de propulsion selon la revendication 7.

9. Avion hypersonique comprenant un système de propulsion selon la revendication 7.

10. Procédé de démarrage d'une turbopompe de moteur fusée au moyen d'un dispositif selon l'une quelconque des revendications 1 à 6, comportant une première étape d'injection d'air comprimé dans une turbine de la turbopompe;
puis une étape d'injection d'ergols dans une chambre de combustion (10) d'un générateur de gaz d'entraînement de la turbopompe grâce à l'entrainement de la turbine par l'air comprimé.

11. Procédé selon la revendication 10, pour lequel l'injection d'air dans la turbine est arrêtée au moyen d'un clapet (15), quand la pression dans le générateur de gaz dépasse la valeur de réglage du clapet.

## Patentansprüche

1. Vorrichtung zum Starten einer Turbopumpe (1) eines Raketentriebwerks (2) eines Luftfahrzeugs, enthaltend ein Turbinentriebwerk (5) des Luftfahrzeugs und das Raketentriebwerk (2),
**dadurch gekennzeichnet, dass**
die Vorrichtung eine pneumatische Versorgung zum Starten einer Turbine (1a) der Turbopumpe über einen Drucklufteinleitkreislauf (3) zum Einleiten von Druckluft enthält, die mittels eines Anstichs (4) an einer Verdichterstufe (6a) des Turbinentriebwerks (5) des Luftfahrzeugs stromaufwärts einer ersten Brennkammer (7) des Turbinentriebwerks entnommen wird, wobei die pneumatische Versorgung den Kreislauf (3) und den Anstich (4) aufweist, und dass
die Vorrichtung eine zweite Brennkammer (10) eines Gasgenerators enthält, der dem Drehantrieb der Turbine (1a) der Turbopumpe (1) zugeordnet ist, wobei die zweite Brennkammer (10) dazu ausgelegt ist, um aufgrund des vorherigen Antriebs der Turbopumpe durch die Druckluft des Einleitkreislaufs (3) mit flüssigem Treibstoff (11, 12) versorgt zu werden.

2. Vorrichtung nach Anspruch 1,
wobei der Drucklufteinleitkreislauf (3) zum Einleiten von Druckluft in die Turbine dazu ausgelegt ist, um die Kammer (10) mittels der Druckluft zu füllen, so dass ein Einleiten von gasförmigem Sauerstoff mit zumindest einem flüssigen Treibstoff oder in einem Gemisch von flüssigen Treibstoffen während der Zündphase des Gasgenerators erfolgt, um das Starten der Verbrennung dieser flüssigen Treibstoffe zu verbessern.

3. Vorrichtung nach Anspruch 1 oder 2,
enthaltend Kühleinrichtungen (8, 9) zum Kühlen der entnommenen Luft.

4. Vorrichtung nach Anspruch 3,
wobei die Kühleinrichtungen einen Wärmetauscher (8) enthalten, der mit Luft von außerhalb des Luftfahrzeugs gekühlt wird.

5. Vorrichtung nach Anspruch 3 oder 4,
wobei bei den Kühleinrichtungen ganz oder teilweise eine Versorgungsleitung zum Versorgen des Raketentriebwerks mit kryogenen Treibstoffen verwendet wird.

6. Vorrichtung nach einem der vorangehenden Ansprüche,
wobei der Drucklufteinleitkreislauf (3) zur pneumatischen Versorgung der Turbine der Turbopumpe mit einem Ventil (13), Kalibriereinrichtungen (14) und einem Rückschlagventil (15) ausgestattet ist, die dazu ausgelegt sind, ausgehend von dem Anstich die Turbine schnell und kontrolliert in Drehung zu versetzen.

7. Antriebssystem eines Luftfahrzeugs, enthaltend zumindest ein Turbinentriebwerk (5) und zumindest ein Raketentriebwerk (2),
**dadurch gekennzeichnet, dass**
es eine Vorrichtung zum Starten einer Turbopumpe (1) des Raketentriebwerks (2) nach einem der vorangehenden Ansprüche enthält.

8. Raumfahrzeug mit einem Antriebssystem nach Anspruch 7.

9. Überschallflugzeug mit einem Antriebssystem nach Anspruch 7.

10. Verfahren zum Staren einer Turbopumpe eines Raketentriebwerks mittels einer Vorrichtung nach einem der Ansprüche 1 bis 6, enthaltend einen ersten Schritt des Einleitens von Druckluft in eine Turbine der Turbopumpe;
dann einen Schritt des Einleitens von Treibstoffen in eine Brennkammer (10) eines Gasgenerators zum Antreiben der Turbopumpe aufgrund des Antriebs der Turbine mit Druckluft.

11. Verfahren nach Anspruch 10, wobei das Einleiten von Luft in die Turbine mittels eines Ventils (15) dann unterbrochen wird, wenn der Druck in dem Gasgenerator den Einstellwert des Ventils übersteigt.

## Claims

1. A device for starting a turbopump (1) of a rocket motor (2) of an aircraft comprising an aircraft-propelling turbine engine (5) and said rocket motor (2), **characterised in that** the device includes a pneumatic supply for starting a turbine (1a) of the turbopump by a circuit (3) for injecting compressed air collected by means of a tap (4) on a compressor stage (6a) of the aircraft-propelling turbine engine (5) upstream of a first combustion chamber (7) of said turbine engine, the pneumatic supply including the circuit (3) and the tap (4), and **in that** the device comprises a second combustion chamber (10) of a gas generator dedicated to rotatably driving the turbine (1a) of the turbopump (1), said second combustion chamber (10) being adapted to be supplied with liquid propellant (11, 12) through the prior driving of the turbopump by the compressed air of the injection circuit (3).

2. The device according to claim 1, wherein the circuit (3) for injecting compressed air in the turbine is adapted to fill said chamber (10) by means of said compressed air so as to perform an oxygen gas injection with at least one liquid propellant or in a mixture of liquid propellants during the ignition phase of the gas generator so as to improve starting of the combustion of these liquid propellants.

3. The device according to claim 1 or 2, comprising cooling means (8, 9) for cooling the collected air.

4. The device according to claim 3, wherein the cooling means include a heat exchanger (8) cooled with the air external to the aircraft.

5. The device according to claim 3 or 4, wherein the cooling means use all or part of a cryogenic propellant supply line of the rocket motor.

6. The device according to any of the preceding claims, wherein the circuit (3) for injecting compressed air for pneumatically supplying the turbine of the turbopump is equipped with a valve (13), calibration means (14) and a check valve (15) adapted to quickly and controllably rotate the turbine from the tap.

7. A system for propelling an aircraft including at least one propelling turbine engine (5) and at least one rocket motor (2) **characterised in that** it includes a device for starting a turbopump (1) of the rocket motor (2) according to any of the preceding claims.

8. An aerospace plane including a propelling system according to claim 7.

9. A hypersonic plane comprising a propelling system according to claim 7.

10. A method for starting a turbopump of a rocket motor by means of a device according to any of claims 1 to 6, including a first step of injecting compressed air in a turbine of the turbopump;
and then a step of injecting propellants in a combustion chamber (10) of a gas generator for driving the turbopump through the turbine being driven by compressed air.

11. The method according to claim 10, wherein air injection into the turbine is stopped by means of a valve (15), when the pressure in the gas generator exceeds the set point of the valve.
